(19) **Europäisches Patentamt**
**European Patent Office**
**Office européen des brevets**

(11) **EP 1 860 884 A1**

(12) **EUROPEAN PATENT APPLICATION**

(43) Date of publication:
**28.11.2007 Bulletin 2007/48**

(51) Int Cl.:
**H04N 7/24** (2006.01)

(21) Application number: **06252762.7**

(22) Date of filing: **26.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **BRITISH TELECOMMUNICATIONS public limited company**
**London EC1A 7AJ (GB)**

(72) Inventor: **The designation of the inventor has not yet been filed**

(74) Representative: **Lloyd, Barry George William et al**
**BT Group Legal**
**Intellectual Property Department**
**PP C5A**
**BT Centre**
**81 Newgate Street**
**London EC1A 7AJ (GB)**

(54) **Video processing**

(57)    An encoded video signal is to be processed so that the resulting display at a decoder is of shorter (or, as desired, longer) than envisaged at the time of encoding. The video signal contains one or more a timing parameters that, at a decoder, are to be determinative of the frame rate at which the signal is decoded. The method comprises buffering the incoming video signal, computing from the timing parameter(s) and the a specified compression (or expansion) at least one modified parameter, and outputting the video signal with the modified timing parameter(s) in place of the received timing parameter. The parameters may include a parameter specifying a frame rate, at least one timestamp specifying a time at which a frame is to be decoded, and/or at least one timestamp specifying a time at which a frame is to be decoded.

**Fig. 2**

**Description**

The present invention is concerned with processing video signals. Sometimes it is desired to compress a video signal in time, so that its duration is shorter than originally; or, conversely, to lengthen it.

U.S patent 5,995,153 describes a method for providing real-time video programme expansion or contraction for matching it to a scheduled time slot, or for creating surplus broadcast time from a programme, for the insertion of advertising or announcements. This system operates by frame-dropping or repetition; that is to say, in the case of contraction, frames of the video signal are deleted, which can be done manually, at regular intervals, or adaptively in dependence on the amount of motion present, so that frames with a high degree of motion are not removed. Similarly, segments of an accompanying sound track can be deleted or repeated to match; this may also be content-dependent and does not have to coincide with the video frame deletions, provided that the differential delay does not become noticeable.

Nowadays, digital video coding techniques usually employ inter-frame differential coding. Often, frames cannot be dropped from such a video signal without causing errors that propagate thought subsequent frames of the video sequence. Thus, the frame-dropping approach becomes unattractive because one has to decode the signal before removing frames, and then in all probability encode it again.

According to the present invention, there is provided a method as defined in the claims.

Some embodiment of the invention will now be described, by way of example, with reference to the accompanying drawings.

We assume that video signals have already been encoded using a conventional method involving inter-frame differential coding, according (in this example) to the MPEG2 standard, though of course the same principles can be applied to H.264 and other standards as well. Coded video signals from a remote encoder are input to a buffer 1, though if preferred the system could be at, or even integrated with, the encoder. The signals arrive at a frame rate determined by the encoder. A control unit 2 reads data from the buffer 1 and sends it on via an output 3 to a remote receiver.

The object of the exercise is that the video signal should be displayed at the receiver in a slightly shorter time period than that envisaged by the encoder. Rather than dropping frames, however, the system operates as follows. It is worth noting that this system does not require any modification to the remote decoder.

In MPEG2, the rate at which decoded frames are to be displayed is signalled to the decoder by a number of mechanisms:

(i) the declared frame rate;
(ii) Decode timestamps;
(iii) Presentation timestamps.

We will deal with each of these in turn.

According to section 6.3.3 of the standard ISO/IEC 13818-2 : 2000 (E), each Sequence Header contains the following parameters:

frame_rate_code which is a four bit code signalling that the base frame rate (called frame_rate_value) is one of 24000/1001 (=23.976...), 24, 25, 30000/1001 (=29.97...), 30, 50, 60000/1001 (=59.94), or 60 frames per second;

frame_rate_extension_n, a two-bit binary number being one less than the numerator of an adjustment factor;

frame_rate_extension_d, a 5-bit binary number being one less than the denominator of the adjustment factor;

so that the actual frame rate is to be determined at the decoder as being

frame_rate =

frame_rate_value * (frame_rate_extension_n + 1)/(frame_rate_extension_d + 1)

In this example we assume that the frame rate set at the encoder is 25 frames per second, so these parameters have the values:

frame_rate_value = 25

frame_rate_extension_n = 0

frame_rate_extension_d = 0

The control unit 2 needs to replace one of more of these parameters with a value appropriate to the desired new frame rate. Suppose that a television programme of one hour duration is to be contracted by 3 minutes, to a duration of 57 minutes. Ideally the frame rate need to be increased to 60/57 times the original frame rate, i.e. 26.316.

This is not achievable exactly within the options permitted by the standard, however a good approximation can be achieved by setting

frame_rate_value = 60

frame_rate_extension_n = 3

frame_rate_extension_d = 8

So that the new frame rate is

new_frame_rate =
frame_rate_value * (frame_rate_extension_ n + 1)/(frame_rate_extension_d + 1) = 60*4/9 = 26.667.
which will give a new playing time of 56 minutes 15 seconds. This is slightly shorter than desired; if the exact length is required this can easily be achieved by applying the rate change only to a part or the programme.

In the general case, the procedure is
Original duration D and new duration d are given.
The old frame rate can be computed from the incoming parameters using the above equation.
The ideal or target new rate r is calculated from r = RD/d. At this point one might simply choose the nearest permitted rate to the target rate. However, we prefer to proceed as follows.
The actual new rate is the obtained by generating a table of all possible rates within a range of interest, say 24 to 60 fps, with the corresponding values of the parameters, and finding from the table the smallest rate r' for which $r' \leq r$.
The time t for which this rate is to be applied to get a total duration d is

$$t = R(D-d)/(r'-R).$$

Turning now to the timestamps, MPEG2 specifies (as part of the Transport Stream specification) that some (but not all) pictures carry Decode timestamps defining the time at which the picture is to be decoded, and Display timestamps which define the time at which the picture is to be displayed. It is not in fact essential to have both timestamps, and indeed, not all decoders actually make use of both. However, unless it is known in advance which type of decoder it to be used, it makes sense to adjust both types of timestamp to match the new frame rate.

The presentation time stamp (PTS) is a 33-bit integer that indicates the intended presentation time at the decoder of the first frame represented by the data in the packet carrying that timestamp. Its actual value is the product, mod $2^{33}$ of the presentation time (in seconds) and the system clock frequency (nominally 90 kHz), rounded to the nearest integer.

In principle, each timestamp is decreased in proportion to the increase of frame rate - i.e. is multiplied by R/r'. However, where transmission at the new rate starts during a sequence, is followed by transmission at the original rate, or where the timestamp wraps (i.e. stamp $2^{33}$-1 is followed by stamp 0), measures are need to avoid discontinuities.[

- in the case where transmission is already taking place at the old rate, it is necessary to record the timestamp $PTS_{ref}$ of the first frame to be at sent at the new rate. If this timestamp is, as will be discussed below, itself subject to an adjustment, then it is the adjusted, outgoing value, not the incoming one, that is used for $PTS_{ref}$.

The incoming timestamp PTS(n) of any subsequent arbitrary frame n at the new rate then has its time *relative to this first frame* scaled to produce a new timestamp PTS'(n) which is written into the outgoing packet header in place of the old one:

$$PTS'(n) = PTSref + NINT\{(PTS(n)-PTSref) .R/r'\}.$$

where NINT means "the nearest integer to".

Note that if the stamps cross the wrap point it is necessary to ensure that the subtraction and the addition are performed modulo $2^{33}$.

If (as envisaged above) a period of onward transmission at an increased frame rate is then to be followed by continuing transmission at the original encoder rate, then the following frames will also need to have their timestamps adjusted.

The last frame at the higher rate has its timestamp calculated as above. For convenience of notation we will refer to this as frame m. The difference between its incoming timestamp PTS(m) and its adjusted timestamp PTS'(m) represents a permanent shift that has to be applied to subsequent timestamps: i.e. for any subsequent frame N requiring a timestamp

$$PTS'(N) = PTS(N) - (PTS(m) - PTS('m)).$$

Again, the subtractions are performed modulo $2^{33}$.

We observe that the above equations may result in a time shift that increases indefinitely upon repeated periods of increased frame -rate operation. However, with the use of modulo arithmetic this is not a problem.

Alternatively, rather than applying this continuing correction, it may be possible to set the discontinuity bit of the MPEG transport stream, thereby re-establishing the timestamp at a value consistent with the incoming frames.

Display timestamps in MPEG-2 have the same format as the presentation timestamps and are dealt with in the same way.

Where the video sequence has an accompanying soundtrack, coded using MPEG, then the rate of play could be adjusted by modifying the timestamps applied to that audio packets in the say way as those applied to the video packets. Alternatively, the audio signal could be temporally contracted using conventional techniques.

It has already been mentioned that no modification is required to the decoder. In most, if not all cases, no modification is required to the display. Essentially there are two possible situations here. One is where the decoder outputs an analogue video signal to a monitor: here we expect that the scanning circuits will easily accommodate a modest increase in scanning rates. The other is where the decoder writes decoded frames into a display buffer, which is then read out at a rather higher frame rate for display on a monitor. This is the situation with computer-based system where, in the UK an incoming 25 fps signal, is read out from the display buffer at perhaps 60 or even 75 fps. Here of course small changes in the decoder write rate have no impact at all on the display.

It will be understood that in the case of the invention, as in the prior art systems, it is possible to suppress or limit the application of the method to selected parts of the video sequence, whether selected manually or automatically according to the picture content. This will of course require the use of instantaneous frame rates that exceed the target frame rate for the whole duration of a transmission. If the difference between the target and the lowest standard rate above is thought to be insufficient, it may be necessary to choose a slightly higher rate.

In the case of the H.264 standard, the implementation is similar to that of MPEG2; there is an overall vui table frame rate. When used in conjunction with RTP, the RTP timestamps may be used.

If , rather than increasing the frame rate to contract the video temporally, it is desired to decrease it to expand the timescale, then the process is as described above, except that of course now the new duration d is greater than D (and hence r>1) and, if the exact duration is required, then r' is the largest rate for which r'≤r.

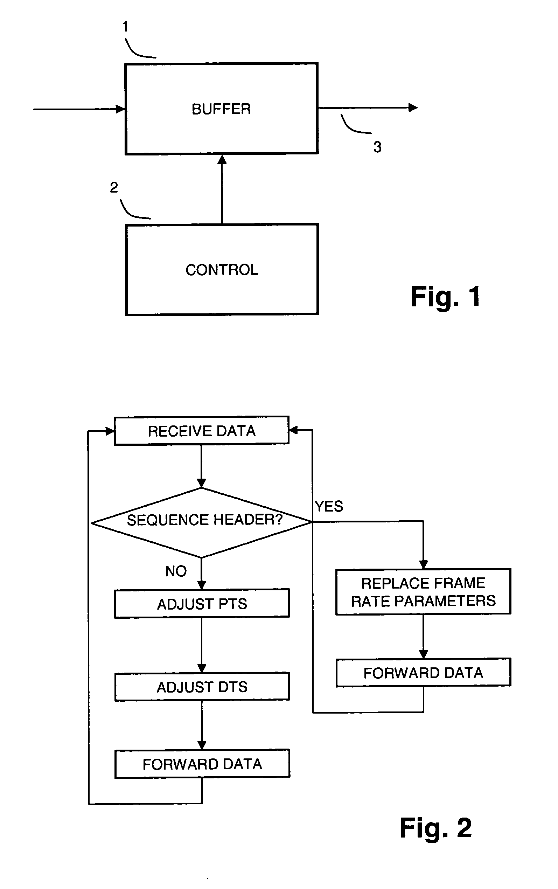

## Claims

1. A method of processing an encoded video signal, the video signal containing one or more a timing parameters that, at a decoder, are to be determinative of the frame rate at which the signal is decoded, comprising buffering the video signal,
   in response to a command specifying a temporal compression or expansion to be applied to the signal, computing from the timing parameter(s) and the specified compression at least one modified parameter,
   and outputting the video signal with the modified timing parameter(s) in place of the received timing parameter.

2. A method according to claim 1 in which the timing parameter(s) include a parameter specifying a frame rate.

3. A method according to claim 1 or 2 in which the timing parameter(s) include at least one timestamp specifying a time at which a frame is to be decoded.

4. A method according to claim 1, 2 or 3 in which the timing parameter(s) include at least one timestamp specifying a time at which a frame is to be decoded.

5. A method according to any one of the preceding claims, for use with a signal format having a timing parameter for specifying one frame rate out of a plurality of predetermined discrete frame rates, including determining, from the received timing parameter specifying a frame rate and the specified compression, a desired frame rate and selecting that one of the discrete frame rates that is closest to the desired frame rate.

6. A method according to any one of claims 1 to 4, wherein the command specifies temporal compression and the method includes, for use with a signal format having a timing parameter for specifying one frame rate out of a plurality of predetermined discrete frame rates, determining, from the received timing parameter specifying a frame rate and the specified compression, a desired frame rate and selecting the smallest of the discrete frame rates that is greater than or equal to the desired frame rate.

7. A method according to any one of the claims 1 to 4, wherein the command specifies temporal expansion and the method includes, for use with a signal format having a timing parameter for specifying one frame rate out of a plurality of predetermined discrete frame rates, determining, from the received timing parameter specifying a frame rate and the specified compression, a desired frame rate and selecting the largest of the discrete frame rates that is less than or equal to the desired frame rate.

**8.** A method according to claim 6 or 7 further including computing a time period, being shorter than a proposed transmission period, during which the selected frame rate is to be applied such that the average frame rate over the desired transmission period shall be substantially equal to the desired frame rate.

**Fig. 1**

**Fig. 2**

European Patent
Office

**EUROPEAN SEARCH REPORT**

Application Number

EP 06 25 2762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHAD FOGG: "MPEG-2 FAQ"[Online] 2 April 1996 (1996-04-02), XP002392152 Retrieved from the Internet: URL:http://web.archive.org/web/20041018080 153/http://bmrc.berkeley.edu/research/mpeg /faq/mpeg2-v38/faq_v38.html> [retrieved on 2006-07-25] * pages 15-16 * * pages 35-36 * | 1-8 | INV. H04N7/24 |
| X | US 2005/190872 A1 (SEONG YEONG-KYEONG ET AL) 1 September 2005 (2005-09-01) * pages 2-3; figures 3-7 * | 1-8 | |
| X | WO 98/37699 A (INTERVU, INC) 27 August 1998 (1998-08-27) * page 9, line 11 - page 10, line 4 * * page 15, line 10 - page 25, line 9; figures 2-7 * | 1-8 | |
| X | EP 0 897 245 A (SARNOFF CORPORATION) 17 February 1999 (1999-02-17) * pages 5-7; figures 1-3 * | 1-8 | TECHNICAL FIELDS SEARCHED (IPC) H04N |
| X | CHAD FOGG: "gethdr.c" MPEG SOFTWARE SIMULATION GROUP, [Online] 4 July 2004 (2004-07-04), XP002392153 internet http://web.archive.org/web/20041128091216/ http://www.mpeg.org/MPEG/MSSG/ Retrieved from the Internet: URL:ftp://ftp.mpegtv.com/pub/mpeg/mssg/old /mpeg2codec_v1.1a.tar.gz> [retrieved on 2006-07-25] * pages 2-3 * * pages 6-7 * | 1-8 | |

-/--

The present search report has been drawn up for all claims

| Place of search | Date of completion of the search | Examiner |
|---|---|---|
| Munich | 26 July 2006 | Moschetti, F |

EPO FORM 1503 03.82 (P04C01)

**European Patent Office**

**EUROPEAN SEARCH REPORT**

Application Number

EP 06 25 2762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 786 909 A (INTERNATIONAL BUSINESS MACHINES CORPORATION) 30 July 1997 (1997-07-30) * pages 3-4 * ----- | 1-8 | |

TECHNICAL FIELDS SEARCHED (IPC)

The present search report has been drawn up for all claims

| Place of search | Date of completion of the search | Examiner |
|---|---|---|
| Munich | 26 July 2006 | Moschetti, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    .......................................................................................
& : member of the same patent family, corresponding document

EPO FORM 1503 03.82 (P04C01)

**EP 1 860 884 A1**

### ANNEX TO THE EUROPEAN SEARCH REPORT
### ON EUROPEAN PATENT APPLICATION NO.

EP 06 25 2762

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2006

| Patent document cited in search report | | Publication date | Patent family member(s) | | Publication date |
|---|---|---|---|---|---|
| US 2005190872 | A1 | 01-09-2005 | CN | 1655619 A | 17-08-2005 |
| | | | EP | 1585336 A1 | 12-10-2005 |
| | | | JP | 2005229593 A | 25-08-2005 |
| WO 9837699 | A | 27-08-1998 | AU | 6672298 A | 09-09-1998 |
| EP 0897245 | A | 17-02-1999 | CA | 2245076 A1 | 13-02-1999 |
| | | | US | 6034731 A | 07-03-2000 |
| EP 0786909 | A | 30-07-1997 | JP | 3320327 B2 | 03-09-2002 |
| | | | JP | 9224244 A | 26-08-1997 |
| | | | KR | 233353 B1 | 01-12-1999 |
| | | | US | 5715176 A | 03-02-1998 |

EPO FORM P0459

For more details about this annex : see Official Journal of the European Patent Office, No. 12/82